# EUROPÄISCHE PATENTANMELDUNG

(11) **EP 2 823 863 A1**
(43) Veröffentlichungstag der Anmeldung: **14.01.2015**
(21) Anmeldenummer: 13003535.5
(22) Anmeldetag: 12.07.2013
(51) Int. Cl.: A62C 37/12, A62C 3/07, A62C 35/02, B29C 70/76

(54) **Feuerlöscher, Anordnung und Verfahren zu seiner Herstellung**

(71) Anmelder: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(57) **Zusammenfassung**

Die Erfindung betrifft einen automatischen Feuerlöscher (1), der vor einem Luftfilter (11) eines Verbrennungsmotors eines Kraftwagens angeordnet ist. Die Erfindung schlägt vor, eine Lufteintrittsöffnung (5) und eine Austrittsöffnung (4) eines Löschmittelbehälters (2) des Feuerlöschers (1) mit wärmeunbeständigen Membranen (7) zu verschließen, die im Falle eines Brandes oder eines beginnenden Brandes schmelzen oder sich zersetzen, so dass Löschpulver aus dem Löschmittelbehälter (2) austritt und den Brand löscht.

## Beschreibung

Die Erfindung betrifft einen Feuerlöscher mit den Merkmalen des Oberbegriffs des Anspruchs 1. Des weiteren betrifft die Erfindung eine Anordnung des Feuerlöschers in einem Lufteinlass einer Brennkraftmaschine mit den Merkmalen des Oberbegriffs des Anspruchs 7 sowie ein Verfahren zur Herstellung des Feuerlöschers mit den Merkmalen des Oberbegriffs des Anspruchs 9.

Feuerlöscher sind an sich bekannt, sie weisen einen Löschmittelbehälter auf, der ein Löschmittel enthält und der eine Austrittsöffnung für das Löschmittel aufweist. Die Austrittsöffnung ist beispielsweise durch ein Ventil verschlossen, das zum Löschen geöffnet wird.

Aufgabe der Erfindung ist einen automatischen Feuerlöscher vorzuschlagen.

Diese Aufgabe wird erfindungsgemäß durch die Merkmale des Anspruchs 1 gelöst. Der erfindungsgemäße Feuerlöscher weist einen wärmeunbeständigen Verschluss einer Austrittsöffnung seines Löschmittelbehälters auf. "Wärmeunbeständig" im Sinne der Erfindung bedeutet, dass der Verschluss bei Umgebungstemperatur und auch bei erhöhter Temperatur, wie sie beim Betrieb einer Brennkraftmaschine insbesondere im Bereich des Lufteinlass auftritt, beständig ist und bei noch höheren Temperaturen, wie sie bei einem Brand auftreten, vorzugsweise bei niedrigeren Temperaturen als bei einem Brand, zerstört wird. Eine Temperaturbeständigkeit des Verschluss wird so gewählt, dass der Verschluss unter normalen Bedingungen, wie sie am Verwendungsort des Feuerlöschers herrschen, zuverlässig weder beschädigt noch zerstört wird und damit die Austrittsöffnung des Löschmittelbehälters bei den normalen Bedingungen zuverlässig verschlossen hält, und dass der Verschluss durch höhere Temperaturen, wie sie bei einem Brand herrschen oder vorzugsweise niedriger, zerstört wird und dadurch die Austrittsöffnung des Löschmittelbehälters freigibt, so dass das im Löschmittelbehälter enthaltene Löschmittel austreten kann. Als geeignete Zerstörungstemperatur des Verschluss des erfindungsgemäßen Feuerlöschers werden ungefähr 100 bis 120°C angesehen. Eine niedrige Zerstörungstemperatur des Verschluss, die allerdings so hoch ist, dass der Verschluss im Normalfall zuverlässig beständig ist, sorgt im Brandfall für einen frühen Austritt des Löschmittels aus dem Löschmittelbehälter und damit für eine frühe Feuerlöschung.

In bevorzugter Ausgestaltung der Erfindung weist der Löschmittelbehälter außer der Austrittsöffnung eine Lufteintrittsöffnung mit einem wärmeunbeständigen Verschluss wie die Austrittsöffnung auf. Im Brandfall werden beide Verschlüsse zerstört und dadurch beide Öffnungen geöffnet, so dass Luft durch den Löschmittelbehälter strömen und Löschmittel aus dem Löschmittelbehälter durch die Austrittsöffnung fördern kann. Die Lufteintrittsöffnung vermeidet einen Unterdruck im Löschmittelbehälter, der den Austritt des Löschmittels behindern würde, wenn beide Öffnungen offen sind. Durch die Lufteintrittsöffnung zusätzlich zur Austrittsöffnung ist der Feuerlöscher für drucklose Löschmittel geeignet.

Eine Ausgestaltung der Erfindung sieht vor, dass der Verschluss eine wärmeunbeständige Membran aufweist. Die Membran kann beispielsweise ein Papier oder eine Kunststofffolie sein. Als Kunststoff kommen beispielsweise Polyolefine bzw. allgemein Kunststoffe mit einer Schmelz-, Zersetzungs- oder Zerstörungstemperatur von beispielsweise ungefähr 100 bis 120°C in Betracht.

Der Löschmittelbehälter besteht bei einer Ausgestaltung der Erfindung aus einem Kunststoff, der eine höhere Temperaturbeständigkeit als der wärmeunbeständige Verschluss aufweist. Durch die Herstellung aus Kunststoff lässt sich der Lösch-mittelbehälter preisgünstig herstellen. Durch seine höhere Temperaturbeständigkeit ist der Löschmittelbehälter zumindest bei Löschbeginn unversehrt.

Eine bevorzugte Ausgestaltung der Erfindung sieht vor, dass der Verschluss eine thermisch isolierende Fassung aufweist. Die Fassung kann insbesondere als eine Art Rahmen ausgebildet sein, die eine Membran umschließt und an ihrem Rand hält. Die Fassung vermeidet einen Kontakt des wärmeunbeständigen Verschluss, insbesondere der wärmeunbeständigen Membran, mit dem Löschmittelbehälter. Bei einer Herstellung des Löschmittelbehälters aus durch Spritzgießen aus Kunststoff verhindert die thermisch isolierende Fassung, dass der wärmeunbeständige Verschluss auf eine ihn schädigende oder sogar zerstörende Temperatur erwärmt wird. Damit ist ein Maß für die thermische Isolierwirkung der Fassung gegeben: Die Fassung muss thermisch so gut isolieren, dass der wärmeunbeständige Verschluss bei der Herstellung des Löschmittelbehälters beispielsweise durch Spritzgießen aus Kunststoff nicht beschädigt oder sogar zerstört wird. Die thermische Isolierwirkung wird durch Wahl des Materials der Fassung und seine Dicke zwischen dem Löschmittelbehälter und dem wärmeunbeständigen Verschluss insbesondere der wärmeunbeständigen Membran, bestimmt.

Eine Weiterbildung der Erfindung sieht vor, dass die Fassung eine Stützeinrichtung für die wärmeunbeständige Membran des Verschluss aufweist. Die Stützeinrichtung kann beispielsweise ein Gitter aufweisen, das die Membran zumindest auf einer Seite stützt. Diese Ausgestaltung der Erfindung erhöht eine Sicherheit gegen unbeabsichtigte Zerstörung der Membran und ermöglicht ein Treibgas, d. h. ein unter Druck stehendes Löschmittel im Löschmittelbehälter. Außer Löschpulvern sind damit auch Wasser oder andere Flüssigkeiten, Löschschaum und Innertgase als Löschmittel möglich. Die Aufzählung ist beispielhaft und nicht abschließend.

Die Erfindung sieht eine Anordnung des automatischen Feuerlöschers im Bereich eines Lufteinlass einer Brennkraftmaschine, insbesondere eines Verbrennungsmotors eines Kraftfahrzeugs vor. Der Feuerlöscher ist am, im oder strömungstechnisch parallel zu einem Lufteinlass der Brennkraftmaschine nach Art eines Bypass angeordnet, d. h. im Normalfall strömt Luft am Feuerlöscher vorbei zur Brennkraftmaschine. Vorzugsweise ist der Feuerlöscher in Strömungsrichtung vor einem Luftfilter der Brennkraftmaschine angeordnet. Saugt eine Brennkraftmaschine einen glühenden, brennenden oder sonstigen heißen Gegenstand an, der einen Brand im Lufteinlass, beispielsweise im Luftfilter, auslöst, zerstört die hohe Brandtemperatur den wärmeunbeständigen Verschluss der Austrittsöffnung und - sofern vorhanden - der Lufteintrittsöffnung des Löschmittelbehälters des erfindungsgemäßen Feuerlöschers. Das im Löschmittelbehälter enthaltene Löschmittel tritt aus und löscht den Brand. Ein Luftstrom durch die Lufteintrittsöffnung des Löschmittelbehälters, den Löschmittelbehälter und durch die Austrittsöffnung fördert beispielsweise ein Löschpulver, das als Löschmittel im Löschmittelbehälter enthalten ist, aus dem Löschmittelbehälter zur Brandstelle.

Zur Herstellung des Feuerlöschers, der eine wärmeunbeständige Membran als wärmeunbeständigen Verschluss der Austrittsöffnung des Löschmittelbehälters und ggf. der Lufteintrittsöffnung, und eine thermisch isolierende Fassung zur Halterung und Befestigung der Membran, aufweist, wird gemäß einer Ausgestaltung der Erfindung die Fassung mit der Membran so in einer Kavität eines Spritzgießwerkzeugs zum Spritzgießen des Löschmittelbehälters angeordnet, dass die Membran beim Spritzgießen des Löschmittelbehälters nicht mit dem Kunststoff des Löschmittelbehälters in Kontakt kommt. Die Kavität ist ein Hohlraum im Spritzgießwerkzeug mit der Form des herzustellenden Löschmittelbehälters. Nach dem Anordnen der Fassung mit der Membran in der Kavität des Spritzgießwerkzeugs wird ein den Löschmittelbehälter bildender Kunststoff in die Kavität eingespritzt. Der Kunststoff des Löschmittelbehälters weist eine höhere Schmelztemperatur als die Temperatur auf, die die Membran des Verschluss schmilzt, zersetzt oder in anderer Weise zerstört. Die Fassung der Membran, die zwischen dem Kunststoff des Löschmittelbehälters und der Membran angeordnet ist, verhindert einen Kontakt der Membran mit dem Kunststoff des Löschmittelbehälters und verhindert einen Temperaturanstieg der Membran beim Spritzgießen, der zu einer Beschädigung oder Zerstörung der Membran führen würde. Das erfindungsgemäße Verfahren ermöglicht eine Herstellung des Löschmittelbehälters des Feuerlöschers durch Spritzgießen aus Kunststoff, wobei die Membran bzw. Ihre Fassung umspritzt wird, so dass die wärmeunbeständige Membran in der Austrittsöffnung und ggf. eine weitere Membran in einer Lufteintrittsöffnung des Löschmittelbehälters angeordnet ist.

Die Erfindung wird nachfolgend anhand eines in der Zeichnung dargestellten Ausführungsbeispiels näher erläutert.

Es zeigen:
- Figur 1: einen Feuerlöscher gemäß der Erfindung ins perspektivischer Darstellung; und
- Figur 2: einen Schnitt eines Ausbruchs im Bereich einer Lufteintrittsöffnung des Löschmittelbehälters aus Figur 1.

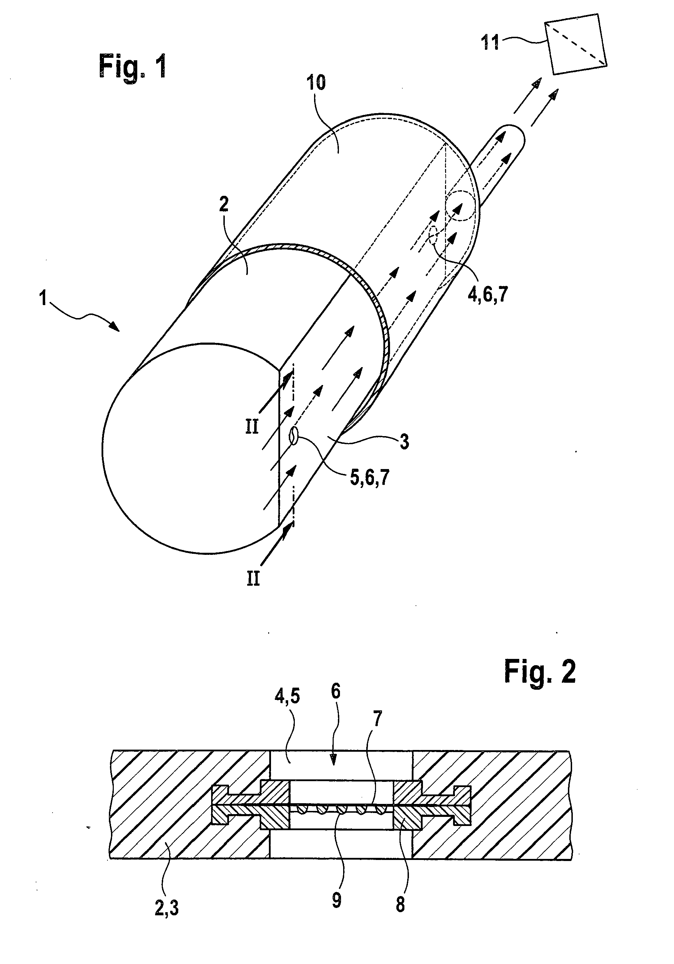

Der in Figur 1 dargestellte Feuerlöscher 1 gemäß der Erfindung weist einen Löschmittelbehälter 2 mit der Form eines Kreissegmentzylinders, der größer als ein Halbzylinder ist, auf. Der Löschmittelbehälter 2 weist also keinen Vollkreis als Querschnittsfläche auf, sondern sein Querschnitt hat die Form eines Kreissegments, das sich über mehr als 180°, beispielsweise etwa 270 bis 300° erstreckt. Allerdings ist die Form des Löschmittelbehälters 2 nicht zwingend für die Erfindung. Der Löschmittelbehälter 2 enthält ein Löschmittel, im Ausführungsbeispiel ein Löschpulver. In einer Flachseite 3 weist der Löschmittelbehälter 2 zwei Öffnungen 4, 5 jeweils nahe seiner Enden auf, von denen eine eine Austrittsöffnung 4 und die andere eine Lufteintrittsöffnung 5 bildet. Die beiden Öffnungen 4, 5 sind von einem wärmeunbeständigen Verschluss 6 verschlossen, der in Figur 2 dargestellt ist. Der Verschluss 6 weist eine wärmeunbeständige Membran 7 auf, die in einer Fassung 8 gehalten ist. Die Fassung 8 bildet eine Art Rahmen, die die Membran 7 umschließt und durchgehend an ihren Rand hält. Im Ausführungsbeispiel ist die Fassung 8 zweiteilig, sie ist in einer Mittelebene geteilt, in der sich die Membran 7 befindet, deren Rand zwischen den beiden Teilen der Fassung 8 eingespannt ist. Die Fassung 8 weist ein Gitter 9 auf einer Seite der Membran 7 auf, an dem die Membran 7 anliegt. Das Gitter 9 der Fassung 8 bildet eine Stützeinrichtung für die Membran 7, es ist bezüglich des Löschmittelbehälters 2 auf einer Außenseite der Membran 7 angeordnet, was ein unter Druck stehendes Löschmittel im Löschmittelbehälter 2 ermöglichen würde (das Löschpulver steht nicht unter Druck). Die Membran 7 besteht aus einer wärmeunbeständigen Kunststofffolie, beispielsweise aus einem Polyolefin, mit einer Schmelz-, Zersetzungs- oder Zerstörungstemperatur von etwa 100 bis 120 °C, im Ausführungsbeispiel von 112°C. Die Schmelz-, Zersetzungs- oder Zerstörungstemperatur der Membran 7 liegt sicher über einer höchsten Temperatur, der der Löschmittelbehälter 2 im normalen Betrieb ausgesetzt ist, und deutlich unter einer Temperatur eines Brandes. Mit sicher über einer Temperatur im Normalbetrieb ist gemeint, dass die Membran 7 bei einer solchen höchsten im normalen Betrieb herrschenden Temperatur sicher beständig ist und die Öffnung 4, 5 hermetisch dicht verschlossen hält. Eine Schmelz-, Zersetzungs-oder Zerstörungstemperatur deutlich unter einer Brandtemperatur bedeutet, dass die Membran 7 bei einem Brand frühzeitig schmilzt, sich zersetzt oder zerstört wird und damit die Öffnungen 4, 5 freigibt. Das ist mit wärmeunbeständigem Verschluss 6 und wärmeunbeständiger Membran 7 gemeint.

Die Fassung 8 besteht wie der Löschmittelbehälter 2 aus einem Kunststoff mit höherer Schmelz- oder Zersetzungstemperatur als die Membran 7, im Ausführungsbeispiel beträgt die Schmelz- oder Zersetzungstemperatur des Löschmittelbehälters 2 und der Fassung 8 der Membran 7 ungefähr 200°C. Zur Herstellung des Feuerlöschers 1 wird zuerst die zweiteilige Fassung 8 durch Spritzgießen aus Kunststoff hergestellt und die Membran 7 nach dem Spritzgießen der Fassung 8 in letztere eingespannt. Anschließend wird die Fassung 8 mit dem Membran 7 in einer Kavität eines nicht dargestellten Spritzgießwerkzeugs angeordnet (es werden die beiden Fassungen 8 mit den beiden Membranen 7 für beide Öffnungen 4, 5 des Löschmittelbehälters 2 in der Kavität des Spritzgießwerkzeugs angeordnet). Das Spritzgießwerkzeug dient zum Herstellen des Löschmittelbehälters 2, es weist einen Hohlraum mit der Form des herzustellenden Löschmittelbehälters 2 als Kavität auf. Die Fassung 8 der Membran 7 ist so im nicht dargestellten Spritzgießwerkzeug angeordnet, dass die Membran 7 nicht mit dem Kunststoff des Löschmittelbehälters 2 in Berührung kommt. Die Fassung 8 isoliert die wärmeunbeständige Membran 7 beim Spritzgießen des Löschmittelbehälters 2 von dem Kunststoff, der den Löschmittelbehälter 2 bildet. Dadurch wird bei der Herstellung des Löschmittelbehälters 2 durch Spritzgießen vermieden, dass die wärmeunbeständige Membran 7, deren Schmelz-, Zersetzungs- oder Zerstörungstemperatur unter der Temperatur des Kunststoffs des Löschmittelbehälters 2 beim Spritzgießen liegt, beim Spritzgießen beschädigt oder zerstört wird.

Der Feuerlöscher 1 bzw. Löschmittelbehälter 2 ist nach Art eines Bypass in einem Gehäuse 10 angeordnet, das Bestandteil eines Lufteinlass einer nicht dargestellten Brennkraftmaschine, insbesondere eines Verbrennungsmotors eines Kraftfahrzeugs ist. "Nach Art eines Bypass" bedeutet, dass zur Brennkraftmaschine strömende Luft, wie sie in Figur 1 mit Pfeilen angedeutet ist, am Löschmittelbehälter 2 vorbeiströmt. In Strömungsrichtung ist der Löschmittel-behälter 2 vor einem Luftfilter 11 im Lufteinlass der nicht dargestellten Brennkraftmaschine angeordnet. Das Luftfilter 11 ist als Symbol gezeichnet. Im Ausführungsbeispiel ist das Gehäuse 10 kreiszylinderrohrförmig, so dass der kreissegmentzylinderförmige Löschmittelbehälter 2 einen kreissegmentförmigen Querschnitt im Gehäuse 10 als Bypass für die am Löschmittelbehälter 2 vorbeiströmende Luft freilässt.

Im Falle eines Brands des oder im Luftfilter 11 erhöht sich eine Temperatur im Gehäuse 10 so weit, dass die wärmeunbeständigen Membranen 7 in der Lufteinlassöffnung 5 und der Austrittsöffnung 4 schmelzen, sich zersetzen oder zerstört werden, wonach die beiden Öffnungen 4, 5 offen sind und Luft wie mit den Pfeilen angedeutet durch die Lufteintrittsöffnung 5 in den Löschmittelbehälter 2 strömt und durch die Austrittsöffnung 4 wieder austritt. Die den Löschmittelbehälter 2 durchströmende Luft nimmt Löschpulver aus dem Löschmittelbehälter 2 mit, so dass das Löschpulver zum und in den Luftfilter 11 gelangt und den Brand löscht. Auch beispielsweise eine brennende Zigarette, ein glühender- oder sonstiger heißer Gegenstand, der mit der Luft in das Gehäuse 10 des Lufteinlass der nicht dargestellten Brennkraftmaschine gelangt, schmilzt, zersetzt oder zerstört die wärmeunbeständigen Membranen 7 in den Öffnungen 4, 5 des Löschmittelbehälters 2 und bewirkt die Freisetzung des Löschpulvers, so dass ein Brand verhindert oder gelöscht wird.

## Patentansprüche

1. Feuerlöscher, mit einem ein Löschmittel enthaltenden Löschmittelbehälter (2), der eine Austrittsöffnung (4) für das Löschmittel aufweist, **dadurch gekennzeichnet, dass** die Austrittsöffnung (4) einen wärmeunbeständigen Verschluss (6) aufweist.

2. Feuerlöscher nach Anspruch 1, **dadurch gekennzeichnet, dass** der Löschmittelbehälter (2) eine Lufteintrittsöffnung (5) mit einem wärmeunbeständigen Verschluss (6) aufweist.

3. Feuerlöscher nach Anspruch 1 oder 2, **dadurch gekennzeichnet, dass** der Verschluss (6) eine wärmeunbeständige Membran (7) aufweist.

4. Feuerlöscher nach einem der Ansprüche 1 bis 3, **dadurch gekennzeichnet, dass** der Löschmittelbehälter (2) aus einem Kunststoff mit einer höheren Temperaturbeständigkeit als der wärmeunbeständige Verschluss (6) besteht.

5. Feuerlöscher nach einem der Ansprüche 1 bis 4, **dadurch gekennzeichnet, dass** der wärmeunbeständige Verschluss (6) eine thermisch isolierende Fassung (8) aufweist.

6. Feuerlöscher nach einem Anspruch 3 und 5, **dadurch gekennzeichnet, dass** die Fassung (8) eine Stützeinrichtung (9) für die Membran (7) aufweist.

7. Anordnung eines Feuerlöschers nach einem der vorhergehenden Ansprüche, **dadurch gekennzeichnet, dass** der Feuerlöscher (1) nach Art eines Bypass in einem Lufteinlass einer Brennkraftmaschine angeordnet ist.

8. Anordnung nach Anspruch 7, **dadurch gekennzeichnet, dass** der Feuerlöscher (1) in Strömungsrichtung vor einen Luftfilter (11) der Brennkraftmaschine angeordnet ist.

9. Verfahren zur Herstellung eines Feuerlöschers nach Ansprüchen 3 bis 5, **dadurch gekennzeichnet, dass** die wärmeunbeständige Membran (7) an oder in einer der thermisch isolierenden Fassung (8) angebracht wird, dass die Fassung (8) mit der Membran (7) so in einer Kavität eines Spritzgießwerkzeugs zum Spritzgießen des Löschmittelbehälters 2 angeordnet wird, dass die Membran (7) beim Spritzgießen des Löschmittelbehälters (2) nicht mit dem Kunststoff des Löschmittelbehälters (2) in Kontakt kommt, und dass nach dem Anordnen der Fassung (8) mit der Membran (7) in der Kavität des Spritzgießwerkzeugs der den Löschmittelbehälter (2) bildende Kunststoff in die Kavität des Spritzgießwerkzeugs eingespritzt wird.
